# EUROPEAN PATENT SPECIFICATION

(11) **EP 2 180 332 B1**
(45) Date of publication and mention of the grant of the patent: **18.01.2017**
(21) Application number: 09013372.9
(22) Date of filing: 22.10.2009
(51) Int. Cl.: B60R 25/102, G01S 19/16, H01Q 1/32

(54) **Motorcycle**
Motorrad
Motocyclette

(30) Priority: 24.10.2008 JP 2008274890; 26.08.2009 JP 2009195669
(43) Date of publication of application: 28.04.2010
(73) Proprietor: Yamaha Hatsudoki Kabushiki Kaisha, Shizuoka-ken Shizuoka 438-8501 (JP)
(72) Inventor: Morishita, Kensuke, Iwata-shi Shizuoka-ken 438-8501 (JP); Ogai, Takashi, Iwata-shi Shizuoka-ken 438-8501 (JP)
(74) Representative: Grünecker Patent- und Rechtsanwälte PartG mbB

(56) References cited:
- EP-A- 1 081 035
- EP-A- 1 225 107
- EP-A- 1 247 706
- JP-A- 2001 027 647
- US-A1- 2004 203 564
- US-A1- 2008 223 642

## Description

The present invention relates to a motorcycle **according to the preamble of independent claim 1. Such a motorcycle can be taken from the prior art document** US 2008/223642 A1**.**

Motorcycles equipped with anti-theft devices have been known. An anti-theft device includes a Global Positioning System (GPS) receiver. The anti-theft device receives GPS signals and can determine the present location of the motorcycle equipped with the anti-theft device.

The motorcycle disclosed by JP 2002-362448 A includes an anti-theft device. In the motorcycle disclosed by JP 2002-362448 A, the anti-theft device is stored at the bottom or a side of a storage box provided under the seat.

An anti-theft device is desirably provided in a position that is not easily accessible, so that the device is not easily removed if the vehicle is stolen. In the motorcycle disclosed by JP 2002-362448 A, the anti-theft device is provided at the bottom or a side of a storage box that is provided under the seat. The storage box is opened/closed by the seat that can be locked. In this way, easy access to the anti-theft device is prohibited.

As disclosed by JP 2008-222078 A, some motorcycles have a large vertical moving range for the rear wheel for the purpose of traveling off-road. In order to secure a large vertical moving range for the rear wheel, the rear wheel and a body cover that covers an area under the seat are provided a great distance apart from each other in the vertical direction. When the seat height is raised, the riding comfort for the rider is degraded. It is difficult to provide an anti-theft device in the space under the seat and above the rear wheel so that easy access to the device is prohibited while keeping the seat height from being raised so that the riding comfort for the rider is not degraded.

It is an objective of the present invention to provide a motorcycle **as indicted above** in which components of a Global Positioning System (GPS) can be prevented from easy access while at the same time the riding comfort of the rider can be maintained.

According to the present invention, said object is solved by a motorcycle having the features of independent claim 1. Preferred embodiments are laid down in the dependent claims.

Accordingly, it is provided a motorcycle as in claim 1.

In this way, a motorcycle including a GPS unit provided so that easy access to the unit is prohibited while keeping the riding comfort for the rider from being degraded can be provided.

As the anti-theft device is provided between a pair of right and left side frames when seen in a top view, it is difficult to access the anti-theft device from the right and left sides.

As the anti-theft device has a greater area when seen in a top view than when seen in a side view, the height of the space used to store the anti-theft device can be reduced.

As the lower cover fixed to the right and left side frames is provided under the anti-theft device, it is difficult to access the anti-theft device from below.

An engine is positioned in front of the rear wheel and is fixed to the frame, a rear end of the rear arm supports the rear wheel, and a front end of the rear arm is rotatably supported by the frame or the engine.

Further, at least a part of a rear cover is positioned behind the seat, and, the rear cover has a front part which is positioned under the seat.

Still further, preferably the seat is fixed by at least one bolt to the frame.

Yet further still, preferably the rear cover is fixed to the frame by at least one bolt.

According to a preferred embodiment, the lower cover comprises side walls that cover the unit from the right and left of the motorcycle, and, preferably, the side walls and the side frames overlap each other when seen in a side view.

Preferably, the lower cover comprises at least one attachment part connected to upper ends of the side walls to extend to the right and left direction of the motorcycle and provided above the side frames.

Further, preferably the lower cover comprises a rear wall that covers the unit from behind the motorcycle in a front-back direction of the motorcycle.

Still further, preferably a coupling frame extends in a crosswise direction of the motorcycle and connects the right and left side frames and, preferably, a lower end of the unit is positioned behind and/or above a lower end of the coupling frame when seen in a side view.

According to another preferred embodiment, a first coupling frame extends in a crosswise direction of the motorcycle and connects the right and left side frames, a second coupling frame is positioned behind the first coupling frame to connect the right and left side frames, the unit is preferably provided in a region surrounded by the right and left side frames, the first coupling frame and the second coupling frame when seen in a top view, and the lower cover is preferably fixed to upper parts of the first coupling frame and the second coupling frame.

Preferably, at least one bolt used to fix the lower cover and the first coupling frame is inserted from an upper side of the lower cover.

Further, preferably at least one bolt used to fix the lower cover and the second coupling frame is inserted from an upper side of the lower cover.

Still further, a lower end of the lower cover is positioned under a lower end of the rear cover when seen in a side view.

Preferably, the unit comprises a radio communication device configured to transmit present positional information received by the antenna to a management center.

Further, preferably the motorcycle is an off-road type vehicle.

In the following, the present invention is explained in greater detail by means of embodiments thereof in conjunction with the accompanying drawings, wherein:
Fig. 1 is a view showing an anti-theft system as a whole according to a preferred embodiment.
Fig. 2 is an entire side view of a motorcycle according to the preferred embodiment.
Fig. 3 is an entire top view of the motorcycle according to the preferred embodiment.
Fig.4 is a side view of a rear part of a frame according to the preferred embodiment.
Fig. 5 is a plan view of the rear part of the frame according to the preferred embodiment.
Fig. 6 is a side view of a rear part of the motorcycle according to the preferred embodiment.
Fig. 7 is a plan view of the rear part of the motorcycle according to the preferred embodiment.
Fig. 8 is a side view of a seat according to the preferred embodiment.
Fig. 9 is a bottom view of the seat according to the preferred embodiment.
Fig. 10 is a side view of a rear cover according to the preferred embodiment.
Fig. 11 is a plan view of the rear cover according to the preferred embodiment.
Fig. 12 is a side view of a lower cover according to the preferred embodiment.
Fig. 13 is a plan view of the lower cover according to the preferred embodiment.
Fig. 14 is a side view of a structure of the rear part of the motorcycle according to the preferred embodiment.
Fig. 15 is a plan view of a structure of the rear part of the motorcycle according to the preferred embodiment.
Fig. 16 is a plan view of a structure of the rear part of the motorcycle according to the preferred embodiment.
Fig. 17 is a plan view of how an anti-theft device according to the preferred embodiment is attached.
Fig. 18 is a side sectional view of how the anti-theft device according to the preferred embodiment is attached.
Fig. 19 is a front sectional view of how the anti-theft device according to the preferred embodiment is attached.
Fig. 20 is a front sectional view of how the lower cover according to the preferred embodiment is attached.

In a motorcycle provided with a storage box large enough in the vertical direction under the seat, an anti-theft device may be provided at a side or the bottom of the storage box. Since the storage box has a sufficiently large size in the vertical direction, the anti-theft device can be provided apart from the upper end of the storage box. The seat is provided on the storage box and the seat can be locked. In a motorcycle provided with a storage box large enough in the vertical direction under the seat, the device can be provided in a location that is not easily accessible.

Some motorcycles have a wide moving range for the rear wheel in the vertical direction in order to travel off-road. In this kind of motorcycle, the rear wheel and a body cover used to cover an area under the seat are provided largely apart from each other in the vertical direction so that a large vertical moving range can be secured for the rear wheel. Therefore, the space between the seat and the body cover is small in the vertical direction. When the size of the space in the vertical direction between the seat and the body cover under the seat is small, an anti-theft device is provided in a location that can be reached easily from the outside. The anti-theft device can be accessed manually or using a tool between the seat and the body cover.

Storing arrangements for an anti-theft device that hardly allow access to the device in a motorcycle that has only a small space in the vertical direction between the seat and the body cover under the seat were studied.

It was considered what would happen when the seat height was raised and the space between the seat and body cover under the seat was expanded in the vertical direction. If the seat height is raised, however, the riding comfort for the rider is degraded. It would be difficult to provide an anti-theft device in a space under the seat and above the rear wheel so that the device cannot be accessed easily while keeping the seat height from being raised and the riding comfort from being degraded.

Then, the possibility of providing an anti-theft device in a location other than under the seat was considered. The anti-theft device may be provided under a fuel tank or a head light. The anti-theft device receives signals transmitted from a GPS satellite. If the anti-theft device is provided under the fuel tank or the head light, signals transmitted from the GPS satellite can be shielded by the fuel tank or the head light, which can lower the receiving sensitivity to GPS signals. If the anti-theft device can be provided successfully in a hardly accessible location, the reduction in the receiving sensitivity to GPS signals prevents the anti-theft device from functioning effectively.

In view of the above-described problems, it is desirable to find an arrangement for providing an anti-theft device in a motorcycle so that the device is hardly accessible while keeping the vehicle size from increasing and the riding comfort for the rider from being degraded.

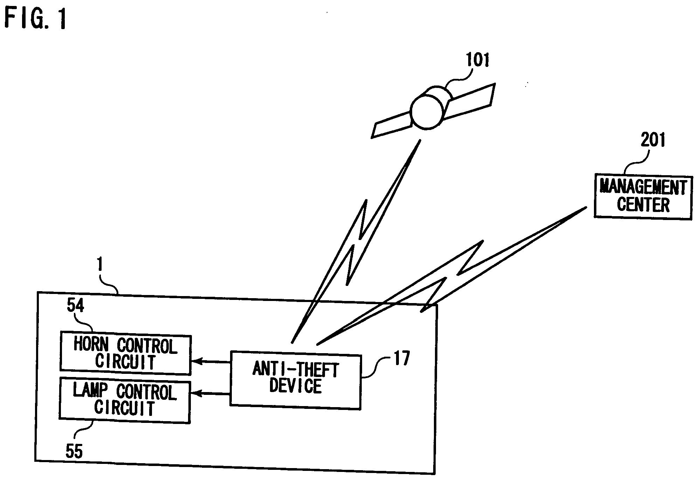

Fig. 1 is a view of an anti-theft system according to a preferred embodiment as a whole. The anti-theft system includes an anti-theft device 17 provided in a motorcycle 1, a Global Positioning System (GPS) satellite 101, and a management center 201.

How the anti-theft system operates will be described. The anti-theft device 17 of the motorcycle 1 includes a GPS receiving function, receives signals transmitted from the GPS satellite 101 and can calculate the present location of the anti-theft device 17. Since the anti-theft device 17 is provided in the motorcycle 1, it can calculate the present teaching of the motorcycle 1. A "unit", respectively a GPS unit, according to the present invention corresponds to the anti-theft device 17 according to the present preferred embodiment.

The anti-theft device 17 has a radio communication function and can transmit the present positional information of the motorcycle 1 to the management center 201 by radio communication. According to the present preferred embodiment, GSM (Global System for Mobile Communication) is used as the radio communication.

When the motorcycle 1 is stolen, the rider of the motorcycle 1 immediately reports the fact to the management center 201 by telephone or the like. The management center 201 obtains positional information transmitted from the anti-theft device 17 provided in the motorcycle 1 and discovers the stolen vehicle.

The anti-theft device 17 is connected to a horn control circuit 54 arranged to set off a horn and a flasher lamp control circuit 55 arranged to turn on a flasher lamp.

The management center 201 transmits an alarm command to the anti-theft device 17 if necessary upon obtaining information about the theft of the motorcycle 1. The anti-theft device 17 can control the horn control circuit 54 and set off the horn in response to the alarm command. Alternatively, the anti-theft device 17 can control the flasher lamp control circuit 55 and flash the flasher lamp in response to the alarm command.

Now, the structure of the motorcycle 1 according to the present preferred embodiment will be described. In the following description, directions such as front, back, right or left direction refer to these directions with respect to the advancing direction of the vehicle unless otherwise specified. More specifically, in the following description, the forward direction viewed from a rider on the seat is the forward direction of the motorcycle 1 and the right or left direction viewed from a rider on the seat is the right or left direction of the motorcycle 1.

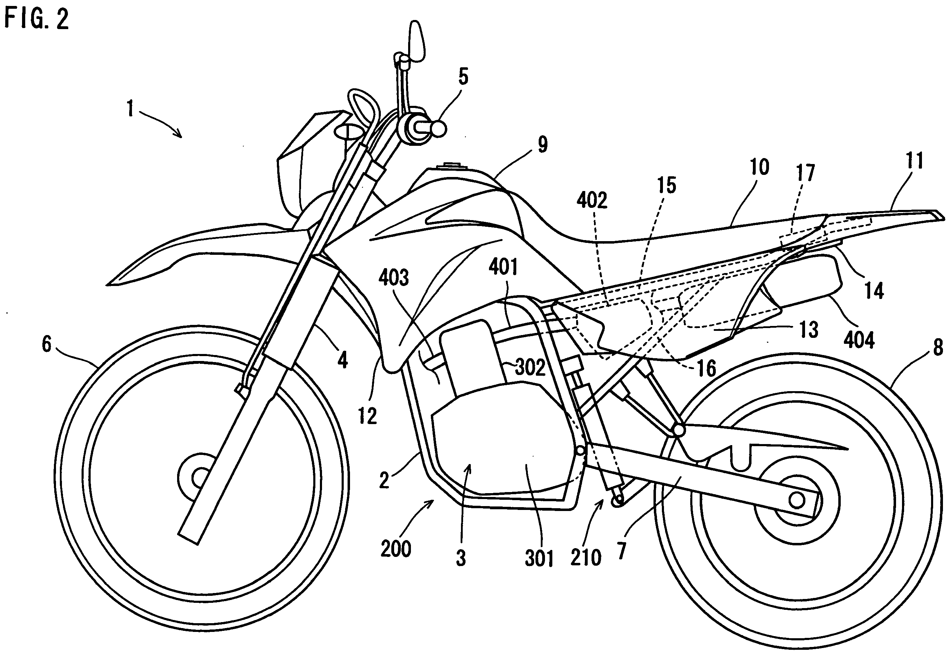

Fig. 2 is an entire side view of the motorcycle 1 according to the present preferred embodiment. The motorcycle 1 is an off-road type vehicle. The motorcycle 1 includes a cradle type main frame 2 in the center of the vehicle. The main frame 2 is provided with an engine 3. The main frame 2 surrounds the upper, lower, front and back parts of the engine 3 when seen in a side view.

A head pipe is provided in front of the main frame 2. A steering shaft is rotatably inserted through the head pipe. A handle 5 is attached at the upper end of the steering shaft. A front fork 4 is provided on the right and left of the steering shaft. The front fork 4 rotates together with the steering shaft. A front wheel 6 is rotatably attached to the lower end of the front fork 4. A rear arm 7 is rotatably attached in the vertical direction at the rear part of the main frame 2. A rear wheel 8 is rotatably attached to the rear end of the rear arm 7. The rear arm 7 and a frame 200 including the main frame 2 are connected by a rear cushion member 210. The rear arm 7 is attached rotatably around the output shaft of the rear part of the crankcase of the engine 3. The front part of the rear arm 7 may be supported only by the frame 200. The front part of the rear arm 7 may be supported only by the engine 3.

A fuel tank 9 is provided above the main frame 2. A seat 10 is provided behind the fuel tank 9. A rear cover 11 is provided behind the seat 10. The rear cover 11 is provided above the rear wheel 8. The upper surface of the seat 10 and the upper surface of the rear cover 11 form a continuous surface.

A pair of right and left side frames 15 is attached to the upper part of the main frame 2. The side frames 15 are extended upward to the back of the vehicle. The side frames 15 extend backward beyond the rear end of the seat 10. The seat 10 and the rear cover 11 are supported by the side frames 15.

A pair of right and left support frames 16 is attached to the main frame 2 under the attachment position of the side frames 15. The support frames 16 extend upward to the back of the vehicle. The rear ends of the support frames 16 are connected to the side frames 15 to support the side frames 15. The main frame 2, the side frames 15, and the support frames 16 are metal frames. The frame 200 of the motorcycle 1 has coupling frames 18 and 19 (that will be described later) in addition to the main frame 2, the side frames 15, and the support frames 16.

The engine 3 includes a crankcase 301 and a cylinder 302 positioned above the crankcase 301. An intake path 401 is connected to the rear part of the cylinder 302. The intake path 401 extends backward from the rear part of the cylinder 302. An air cleaner 402 is connected to the rear part of the intake path 401. An exhaust path 403 is connected to the front part of the cylinder 302. The exhaust path 403 extends forward from the front part of the cylinder 302 and then backward along the side of the cylinder 302. The other end of the exhaust path 403 is connected with a muffler 404. The muffler 404 partly overlaps the side cover 13 when seen in a side view. The muffler 404 is positioned on the left of the right side cover 13.

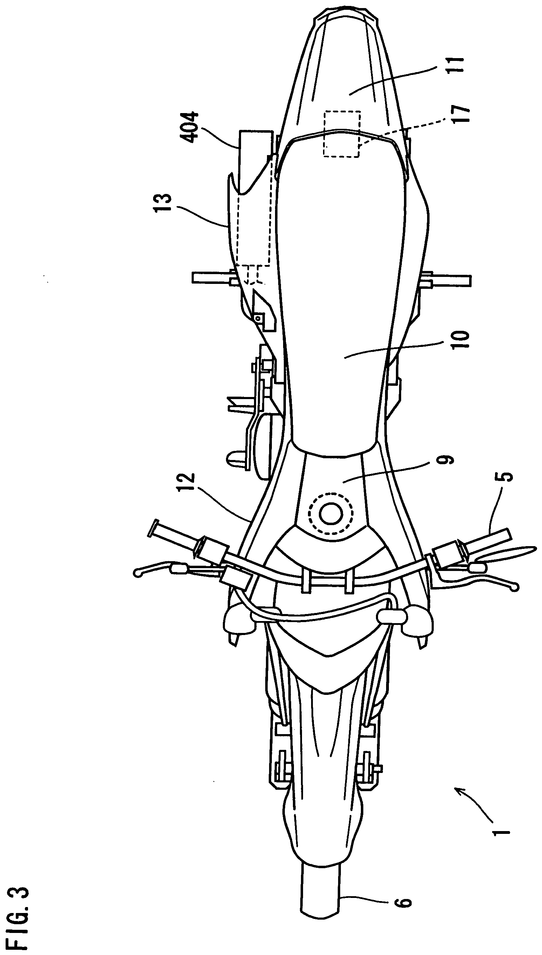

Fig. 3 is a plan view of the motorcycle 1. As shown in Fig. 3, the seat 10 extends from the vicinity of the center of the body to the back and a rear cover 11 is provided behind the seat 10. The rear cover 11 is provided to cover the rear wheel 8 from above. As will be described in detail, an anti-theft device 17 according to the present preferred embodiment is provided under the rear cover 11.

Referring back to Fig. 2, a pair of right and left front covers 12 is provided on the left and right of the fuel tank 9. The front covers 12 extend downward from the lower part of the fuel tank 9. A pair of right and left side covers 13 is attached on the left and right of the seat 10. The side covers 13 extend downward from the lower part of the seat 10.

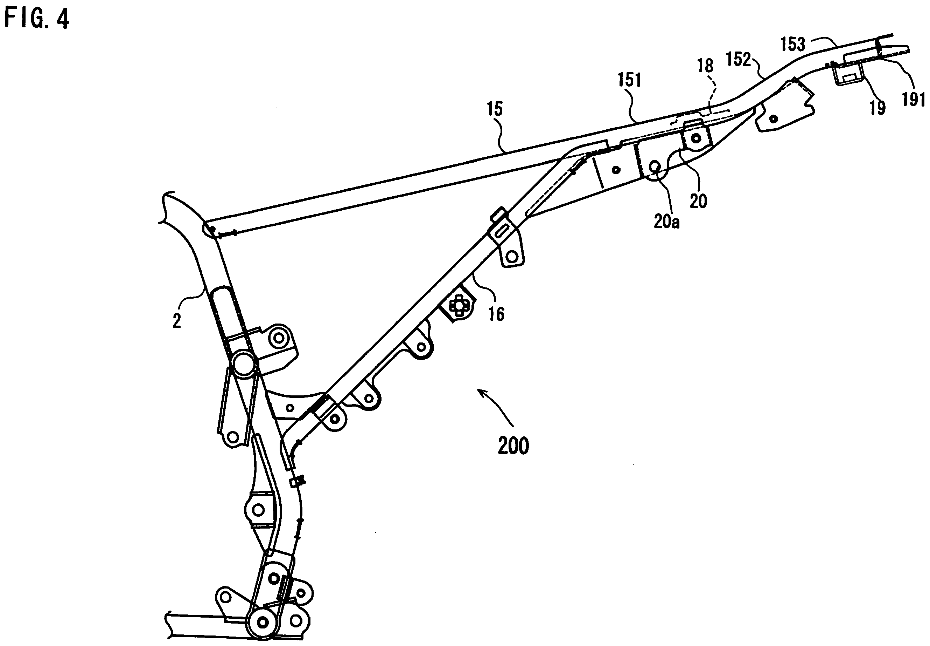

Fig. 4 is a side view of the frame 200. As described above, the frame 200 has the main frame 2 and the side frames 15 connected to the main frame 2 and support frames 16.

The side frames 15 each include a first frame portion 151 that extends linearly under the seat 10. The first frame portion 151 extends upward to the back of the vehicle. The side frames 15 each include a second frame portion 152 that continues from the rear end of the first frame portion 151. The second frame portion 152 is inclined upward at a greater angle than the first frame portion 151. The side frames 15 each include a third frame portion 153 that continues from the rear end of the second frame 152. The third frame portion 153 is inclined upward at a smaller angle than the second frame portion 152.

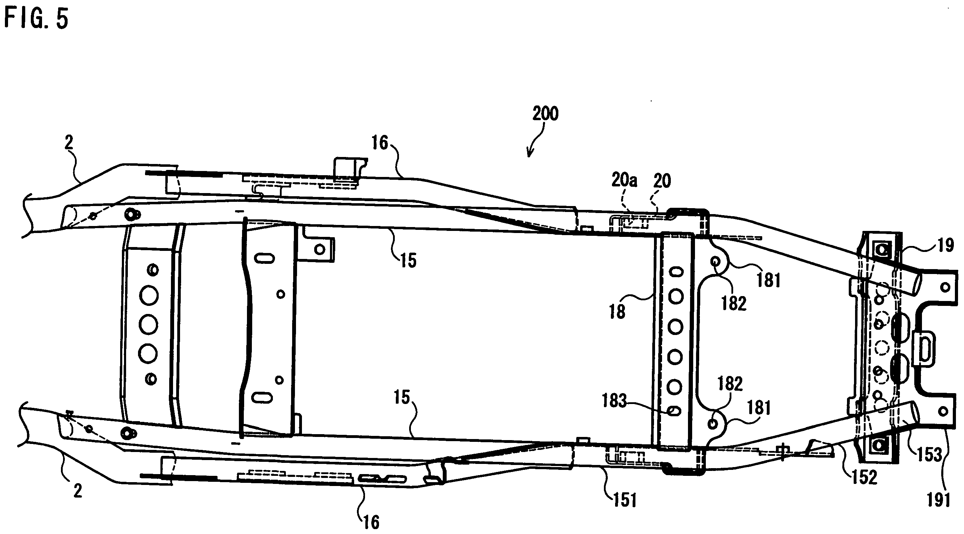

Fig. 5 is a plan view of the frame 200. The first frame portions 151 on the right and left are provided approximately parallel to the front-back direction of the vehicle. The second frame portions 152 and the third frame portions 153 on the right and left extend to the center of the vehicle with respect to the crosswise direction of the vehicle.

The coupling frame 18 used to couple the right and left first frame portions 151 is provided near the rear ends of the right and left first frame portions 151. As will be described, a lower cover 14 used to store the anti-theft device 17 is fixed to the coupling frame 18. The coupling frame 18 has projections 181 that project backward. Bolt holes 182 are formed at the projections 181. The lower cover 14 is fixed through the bolt holes 182.

The coupling frame 18 has bolt holes 183 used to fix the seat 10. While the seat 10 is attached to the frame 200, bolts are inserted from the bolt holes 183, so that the seat 10 is fixed.

Coupling frames 19 and 191 used to couple the right and left third frame portions 153 are attached under the right and left third frame portions 153. The coupling frame 191 is attached as it is held between the coupling frame 19 and the side frames 15. The lower cover 14 used to store the anti-theft device 17 is fixed to the coupling frame 191.

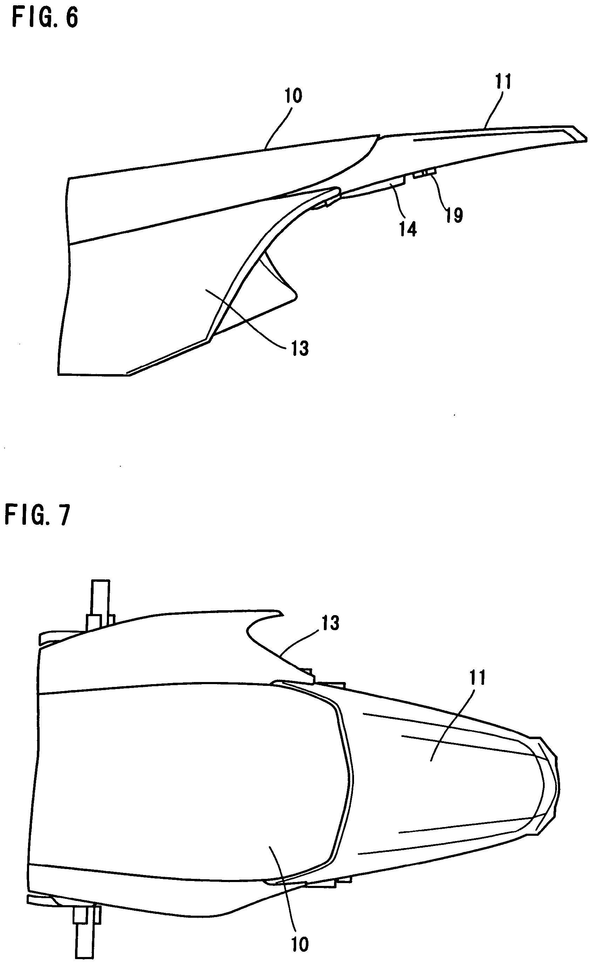

Fig. 6 is a side view of the rear part of the motorcycle 1. Fig. 7 is a plan view of the rear part of the motorcycle 1. As shown in Figs. 6 and 7, the rear part of the seat 10 is provided to cover the upper part of the front part of the rear cover 11. Therefore, the rear cover 11 cannot be removed without removing the seat 10.

As shown in Fig.6, the bottom of the lower cover 14 is partly exposed from the lower part of the rear cover 11. The lower side of the anti-theft device 17 is covered with the lower cover 14 and the upper side of the anti-theft device 17 is covered with the rear part of the seat 10 and the front part of the rear cover 11.

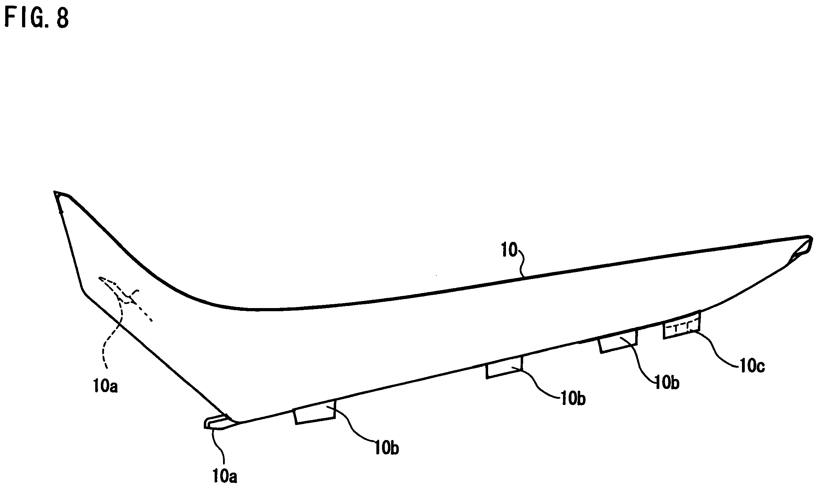

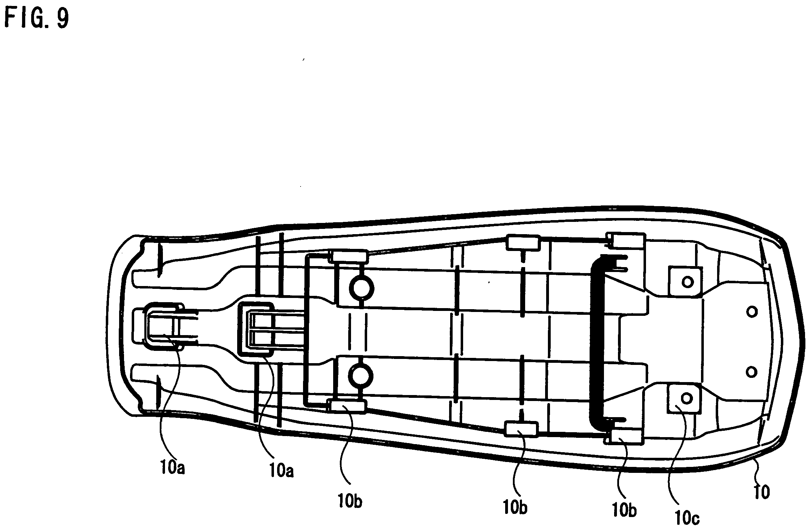

Fig. 8 is a side view of the seat 10. Fig. 9 is a bottom view of the seat 10. The bottom surface of the seat 10 has projections 10a on its front-end side. The projections 10a are attached to attachment parts (not shown) provided near the rear part of the fuel tank 9. A plurality of support parts 10b is provided at the bottom surface of the seat 10. The plurality of support parts 10b can receive the load of the seat 10 as they are in contact with the side frames 15.

Bolt holes 10c are provided at the bottom of the seat 10 on the rear end side. When the seat 10 is attached, the bolt holes 10c are provided opposed to the bolt holes 183 of the coupling frame 18. In this state, the bolts are tightened so that the seat 10 is fixed.

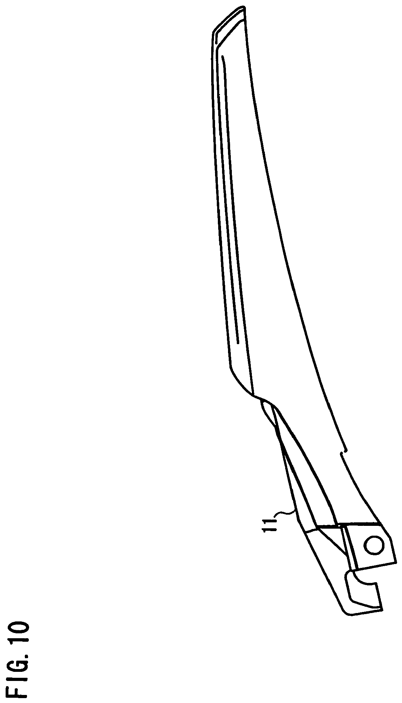

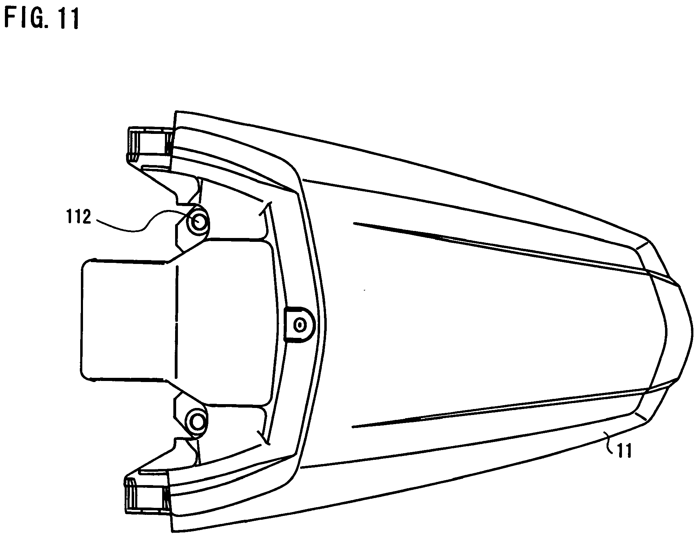

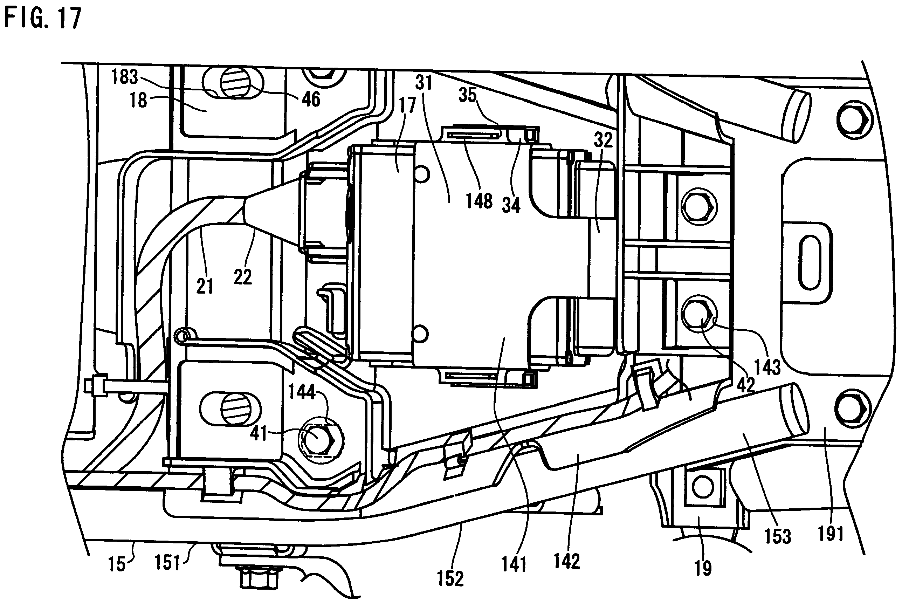

Fig. 10 is a side view of the rear cover 11. Fig. 11 is a plan view of the rear cover 11. As shown in Fig. 11, bolt holes 112 are formed under the front-end part of the rear cover 11. Bolts 41 (Fig. 17) are mounted as the bolt holes 112 are registered to the bolt holes 182 formed at the coupling frame 18. In this way, the rear cover 11 is fixed to the coupling frame 18.

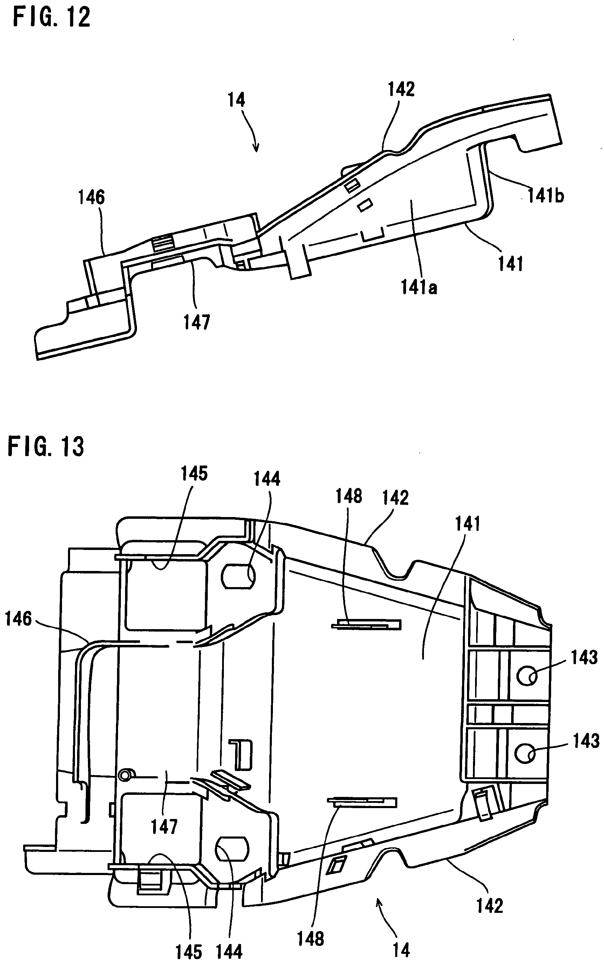

Fig. 12 is a side view of the lower cover 14. Fig. 13 is a plan view of the lower cover 14. The lower cover 14 is a cover made of resin. As shown in Fig. 12, a box type case portion 141 opened to the upper side is formed on the rear part side of the lower cover 14. The bottom surface of the case portion 141 is formed to have an approximately flat shape and therefore the anti-theft device 17 can be attached easily thereto. Side walls 141 a on the right and left sides of the case portion 141 serve as the side walls of the lower cover 14. The right and left side walls 141 a make it difficult to access the anti-theft device 17 from the right and left sides. The rear wall 141b of the case portion 141 serves as the rear wall of the lower cover 14. The rear wall 141b makes it difficult to access the anti-theft device 17 from behind.

The side walls 141a on the right and left sides of the case portion 141 have their upper ends bent outwardly to form attachment parts 142. The right and left attachment parts 142 are provided to cover the right and left second frame portions 152.

As shown in Fig. 13, right and left bolt holes 143 are formed at the rear end of the lower cover 14. Bolts 42 used to connect the lower cover 14 and the coupling frame 191 are inserted into the bolt holes 143. As described above, the coupling frame 191 is used to couple the right and left side frames 15.

The lower cover 14 has right and left bolt holes 144 more on the front side than the center in the front-back direction. Bolts 41 used to connect the lower cover 14 and the rear cover 11 to the coupling frame 18 are inserted into the bolt holes 144. As described above, the coupling frame 18 is used to couple the right and left side frames 15.

The lower cover 14 has a bridge portion 147 more on the front side than the position of the right and left bolt holes 144. The bridge portion 147 is positioned above the coupling frame 18, as the lower cover 14 is attached to the side flames 15. The bridge part 147 has right and left openings 145. The coupling frame 18 is exposed to the above through the right and left openings 145. The bolt holes 183 formed at the coupling frame 18 are positioned at the exposed parts viewed through the openings 145.

A guide plate 146 is formed near the front end of the lower cover 14. The guide plate 146 is approximately L-shaped when seen in a top view. The wiring direction of the cable attached to the anti-theft device 17 is guided by the guide plate 146.

A pair of right and left insert plates 148 is attached at the bottom of the case portion 141. The insert plates 148 extend approximately perpendicularly to the bottom surface of the case portion 141. The insert plates 148 are used to fix the anti-theft device 17.

The lower cover 14 arranged in this way is provided above the right and left side frames 15 and the rear side of the lower cover 14 is fixed to the coupling plate 191 by the bolts 42 (see Fig. 17). The front side of the lower cover 14 is fixed to the coupling frame 18 together with the rear cover 11 by the bolts 41.

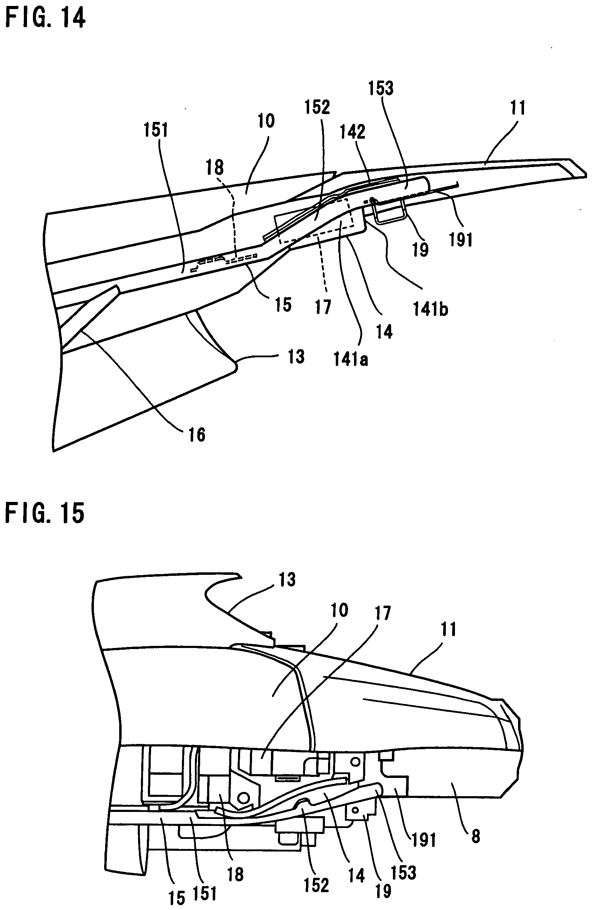

Fig. 14 is a side view of the rear part of the motorcycle 1. In Fig. 14, the seat 10 and the rear cover 11 are partly cut to show the internal structure of the rear cover 11 for descriptive purposes. The rear ends of the third frame portions 153 extend backward in the space in the rear cover 11.

The lower cover 14 is provided in a position overlapping the second frame portion 152 when seen in a side view. As described above, the anti-theft device 17 is stored in the lower cover 14. Therefore, the anti-theft device 17 is provided in a position overlapping the second frame portion 152 when seen in a side view.

Fig. 15 is a plan view of the rear part of the motorcycle 1. In fig. 15, the seat 10 and the rear cover 11 are partly cut to show the internal structure under the seat 10 and the rear seat 11 for descriptive purposes.

The anti-theft device 17 is provided above the lower cover 14. The anti-theft device 17 is provided in a position overlapping the rear end of the seat 10 when seen in a top view.

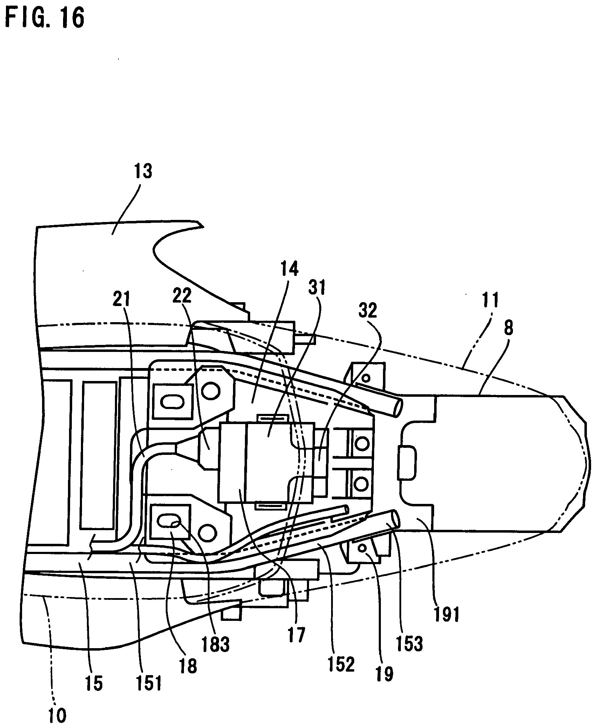

Fig. 16 is a plan view of the rear part of the motorcycle 1. Fig. 17 is a plan view showing the attachment part of the anti-theft device 17 being enlarged. The anti-theft device 17 having an approximately rectangular parallelepiped shape is provided approximately in the center in the crosswise direction of the vehicle.

The anti-theft device 17 has an approximately rectangular parallelepiped shape and its upper surface and bottom surface are provided at an inclination angle about equal to the inclination angle of the first frame 151 with respect to a horizontal plane. The area (face surface) of the right and left side surfaces of the anti-theft device 17 is smaller than the area (face surface) of the upper surface or the bottom surface. The area of the front and back side surfaces of the anti-theft device 17 is smaller than the area of the upper surface or the bottom surface. The anti-theft device 17 has a box shape whose length in the vertical direction is smaller than the length in the crosswise direction and the length in the front-back direction.

The anti-theft device 17 is connected with a cable 21 through a connector 22. The cable 21 includes a power supply line or a signal line. The cable 21 is guided to the guide plate 146 formed at the lower cover 14 and bent in an L-shape and then extends forward under the seat 10.

A rubber protection cover 31 is provided to the anti-theft device 17. The protection cover 31 is formed circularly and wound circularly around the anti-theft device 17 in the crosswise direction. A rear belt 32 is formed to the rear side of the protection cover 31. The protection cover 31 covers around the anti-theft device 17 in the crosswise direction and the rear belt 32 covers the rear side of the anti-theft device 17.

As shown in Fig. 17, projections 34 are formed at the right and left of the protection cover 31. The projections 34 each have an insert hole 35 penetrating through in the vertical direction. The insert plates 148 formed at the lower cover 14 are inserted into the insert holes 35. The insertion of the insert plates 148 into the insert holes 35 allows the anti-theft device 17 to be fixed to the lower cover 14 as the device is wrapped with the protection cover 31. In this way, the protection cover 31 serves both to protect the anti-theft device 17 and to fix the anti-theft device 17 to the lower cover 14.

The coupling frame 18 has the bolt holes 183 into which bolts 46 are inserted. The insertion of the bolts 46 into the bolt holes 10c of the seat 10 fixes the seat 10.

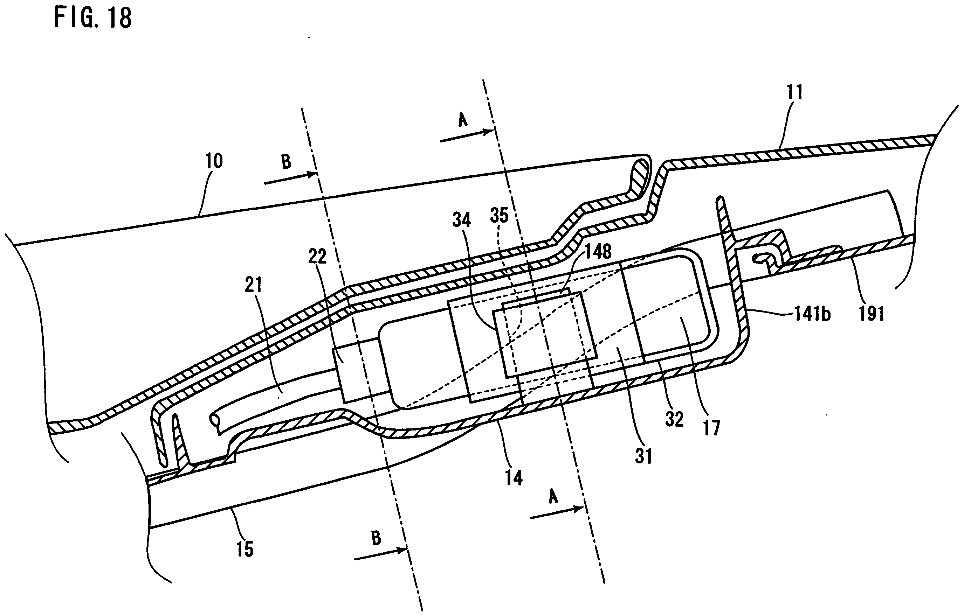

Fig. 18 is a side sectional view of the seat 10, the rear cover 11, the lower cover 14, and the anti-theft device 17. As shown in Fig. 18, the anti-theft device 17 is covered with the seat 10 and the rear cover 11 from above and with the lower cover 14 from below.

The front end of the rear cover 11 comes under the seat 10 and is covered with the seat 10. As described above, the rear cover 11 is fixed to the coupling frame 18 by the bolts 41 and the seat 10 is fixed to the coupling frame 18 by the bolts 46. Therefore, in order to access the anti-theft device 17, the bolts 46 used to fix the seat 10 must be removed first and then the seat 10 must be removed from the vehicle. Then, in order to access the anti-theft device 17, the bolts 41 used to fix the rear cover 11 must be removed and the rear cover 11 must be removed from the coupling frame 18. In this way, the anti-theft device 17 cannot be accessed without carrying out the two-stage bolt removing operation.

According to the present preferred embodiment, the bolts 41 are Torx^{®} bolts. The head shape of the bolt 41 is special and the bolt 41 cannot be removed using an ordinary driver. This makes access to the anti-theft device more difficult.

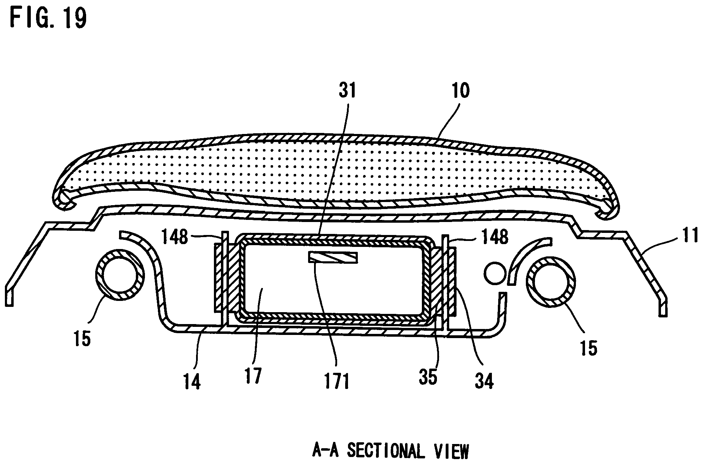

Fig. 19 is a front sectional view showing how the seat 10, the rear cover 11, the lower cover 14, and the anti-theft device 17 are attached. Fig. 19 is a sectional view taken along A-A in Fig. 18.

The lower side of the anti-theft device 17 is covered with the lower cover 14. The lower cover 14 is a member made of resin and right and left attachment parts 142 are provided to wound around the upper parts of the right and left side frames 15. This makes it very difficult to remove the lower cover 14 from the lower side (the region between the rear cover 11 and the rear wheel 8). The lower cover 14 is provided above the coupling frame 18 and the coupling frame 191, so that it is substantially impossible to remove the lower cover 14 from the lower side.

The lower cover 14 has its rear end side fixed by the bolts 42 and its front end side fixed by the bolts 41. The bolts 42 and 41 are both inserted from the upper side of the lower cover 14. Therefore, it is substantially impossible to remove the bolts 42 or 41 from the lower side (the region between the rear cover 11 and the rear wheel 8) of the lower cover 14.

The anti-theft device 17 is provided as it is held between the right and left side frames 15. The side frames 15 and the right and left side walls 141 a of the lower cover 14 prevent access to the anti-theft device 17 from the right and left of the anti-theft device 17. Therefore, it is difficult to access the anti-theft device 17 with respect to the widthwise direction of the vehicle.

The anti-theft device 17 has its upper surface positioned above the upper surface of the side frames 15 as shown in Figs. 18 and 19. Therefore, the GPS antenna 171 provided in the anti-theft device 17 does not suffer from interference because of the side frames and the receiving sensitivity to GPS signals is not degraded.

According to the present preferred embodiment, the GPS antenna 171 is provided near the upper surface of the anti-theft device 17 as shown in Fig. 19. The upper surface of the anti-theft device 17 is positioned above the side frames 15 and therefore good receiving sensitivity is achieved.

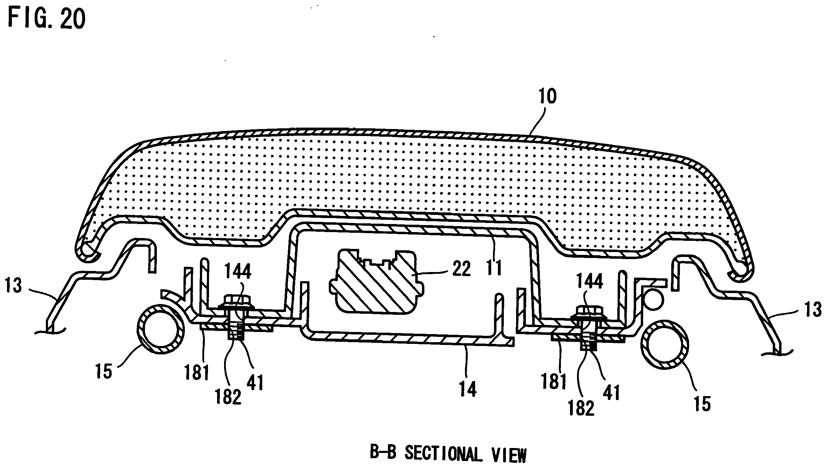

Fig. 20 is a front sectional view showing how the seat 10, the rear cover 11, the side cover 13, the lower cover 14, the coupling frame 18, and the connector 22 are arranged. Fig. 20 is a sectional view taken along B-B in Fig. 18.

Bolts 41 are inserted in the right and left bolt holes 112 formed at the rear cover 11, in right and left bolt holes 144 formed at the lower cover 14 and bolt holes 182 formed at the right and left projections 181 of the coupling frame 18. The lower cover 14 and the rear cover 11 are fixed to the coupling frame 18 by the right and left bolts 41.

As in the foregoing, the motorcycle 1 according to the present preferred embodiment includes the seat 10 positioned above the side frames 15 and the rear cover 11 positioned behind the seat 10 and having its front end positioned under the seat 10. The anti-theft device 17 includes the antenna 171 used to receive GPS signals and is provided under the rear cover 11. In order to access the anti-theft device 17 from above, both the seat 10 and the rear cover 11 must be removed. It is therefore difficult to make easy access to the anti-theft device 17 from above.

The anti-theft device 17 is provided between the pair of side frames 15 when seen in a top view. The side frames 15 are metal frames and can make it difficult to access the anti-theft device 17 from the right and left.

The lower cover 14 fixed to the side frames 15 is provided under the anti-theft device 17. This also makes it difficult to access the anti-theft device 17 from below. In this way, the anti-theft device 17 is covered with a double-cover arrangement including the seat 10 and the rear cover 11 from above, held between the side frames 15 from the right and left, and covered with the lower cover 14 from below. This makes it extremely difficult to falsely access the anti-theft device 17.

The anti-theft device 17 is provided to have a greater area when seen in a top view than in a side view and the height of the space to store the anti-theft device 17 can be lowered. When a sufficient vertical moving range is secured for the rear wheel, the seat height can be prevented from being raised. Furthermore, the area when seen in a top view is large, and therefore the GPS antenna can be provided easily on the upper surface side. In this way, the receiving sensitivity to GPS signals can be kept high.

As in the foregoing, in the motorcycle equipped with the anti-theft device having the GPS, the anti-theft device can be mounted so that the riding comfort for the rider is not degraded and easy access to the device is prohibited.

According to the present preferred embodiment, the bolts used to fix the seat 10 and the frame must be removed in order to remove the seat 10. This makes it more difficult to access the anti-theft device 17.

According to the present preferred embodiment, the rear cover 11 is fixed to the coupling frame 18 by the bolts. This can make it even more difficult to access the anti-theft device 17.

According to the present preferred embodiment, the lower cover 14 has side walls that cover the right and left sides of the anti-theft device 17. When seen in a side view, the side wall and the side frame 15 are arranged to overlap each other, which makes it more difficult to access the anti-theft device 17 from the right and left of the vehicle. The side frames 15 and the anti-theft device are provided to overlap when seen in a side view, so that one of the side frames 15 touches the ground or like when the motorcycle tumbles to the right or left, and the anti-theft device 17 can be protected.

According to the present preferred embodiment, the lower cover 14 has attachment parts 142 formed at the upper ends of the side walls 141a, bent to the right and left direction of the vehicle and provided on the upper side of the side frames 15. It is substantially impossible to remove the lower cover 14 from the lower side. Therefore, the anti-theft device can be provided above the lower cover in the motorcycle so that easy access to the device is prohibited.

Furthermore, the lower cover 14 has the rear wall 141b that covers the anti-theft device 17 from behind in the front-back direction of the vehicle. This makes it difficult to access the anti-theft device 17 from the rear side of the vehicle. In this way, the anti-theft device that is provided above the lower cover can be provided in the motorcycle so that easy access to the device is prohibited.

According to the present preferred embodiment, the coupling frame 18 is arranged to extend in the crosswise direction of the vehicle and connect the right and left side frames 15. The lower end of the anti-theft device 17 is positioned behind and above the lower end of the coupling frame 18. The anti-theft device 17 is provided above the rear wheel 8 and the upper end of the moving range of the rear wheel 8 is determined by the coupling frame 18. Therefore, when the anti-theft device 17 is provided above the rear wheel 8, the motorcycle can be prevented from being increased in size. Stated differently, the anti-theft device 17 can be provided under the seat without reducing the vertical moving range of the rear wheel 8 and degrading the riding comfort for the rider.

According to the present preferred embodiment, the coupling frame 18 and the coupling frame 191 are arranged to extend in the crosswise direction of the vehicle and couple the right and left side frames 15. When seen in a top view, the anti-theft device 17 is provided in the region surrounded by the side frames 15, the coupling frame 18, and the coupling frame 191, and the lower cover 14 is fixed at the upper parts of the coupling frame 18 and the coupling frame 191. The anti-theft device is provided in a position covered by the side frames 15, the coupling frame 18 and the coupling frame 191, which can make it very difficult to access the anti-theft device. It is difficult to remove the lower cover 14 from below and this makes it very difficult to access the anti-theft device 17.

According to the present preferred embodiment, the bolts used to fix the lower cover 14 and the coupling frames 18 and 191 are inserted from the upper side of the lower cover 14. Unless the seat 10 and the rear cover 11 are removed, the bolts used to fix the lower cover 14 cannot be removed. This makes it even more difficult to access the anti-theft device 17.

According to the present preferred embodiment, the lower end of the lower cover 14 is positioned under the lower end of the rear cover 11 when seen in a side view. The rear cover 11 has a compact shape and can prevent the motorcycle from being increased in size. Stated differently, the anti-theft device 17 can be provided under the seat, while the vertical moving range of the rear wheel 8 is not reduced, and the seat height can be prevented from being raised, so that the riding comfort for the rider can be prevented from being degraded.

According to the present preferred embodiment, the anti-theft device 17 includes a radio communication device used to transmit the present positional information received by the GPS antenna 171 to the management center. The GPS positional information is thus transmitted to the management center 201, so that stolen vehicles can be tracked down without delay.

The arrangement of the frames is not limited to that of the present preferred embodiment. For example, the main frame and the side frames may be formed separately and then fixed by welding or bolts. The material of the frames is not limited to the pipe material but they may be cast frames.

The shapes of the lower cover and the rear cover are not limited to those of the present preferred embodiment. The rear cover needs only be positioned above the anti-theft device, and for example the rear cover may extend forward to cover a part of a harness connected to the anti-theft device. The lower cover needs only be positioned under the anti-theft device and for example the front end of the lower cover may be more on the rear side than the front end of the coupling frame 18.

The method of fixing the anti-theft device is not limited to that of the present preferred embodiment. The anti-theft device may be fixed for example to the rear cover or both the rear cover and the lower cover. The anti-theft device may be fixed by bolts or the like.

Among others, the description above discloses an embodiment of a motorcycle 1 including a seat 10 positioned above side frames 15 and a rear cover 11 positioned behind the seat 10 and having a front end part positioned under the seat 10. An anti-theft device 17 includes a GPS antenna 171 and is provided under the rear cover 11. The anti-theft device 17 is provided between the right and left side frames 15 when seen in a top view. The anti-theft device 17 is provided to have a greater area when viewed in a top view than in a side view, and a lower cover 14 fixed to the side frames 15 is provided under the device.

## Claims

1. Motorcycle, comprising:
a rear wheel (8) rotatably supported by a rear arm (7) configured to swing in vertical direction;
a frame (200) having right and left side frames (15) extending upward to a back of the motorcycle (1) above the rear wheel (8);
an engine (3) positioned in front of the rear wheel (8) and fixed to the frame (200), a rear end of the rear arm (7) supports the rear wheel (8), and a front end of the rear arm (7) is rotatably supported by the frame (200) or the engine (3),
a seat (10) provided above the right and left side frames (15),
a rear cover (11), at least a part of the rear cover (11) is positioned behind the seat (10), and the rear cover (11) has a front part which is positioned under the seat (10), **characterized by**
a unit (17) including an antenna configured to receive a Global Positioning System (GPS) signal and provided between the right and left side frames (15), wherein the unit (17) has a box shape whose length in a vertical direction is smaller than a length in the crosswise direction and a length in the front-back direction, so that unit (17) has a greater area when seen in a top view than when seen in a side view; and
a lower cover (14) positioned under the unit (17) and fixed to the right and left side frames (15), wherein a lower side of the unit (17) is covered with the lower cover (14) and an upper side of the unit (17) is covered with a rear part of the seat (10) and the front part of the rear cover (11).

2. Motorcycle according to claim 1, **characterized in that** the unit (17) and the side frames (15) overlap each other when seen in a side view.

3. Motorcycle according to claim 1 or 2, **characterized in that** the seat (10) is fixed by at least one bolt to the frame (200).

4. Motorcycle according to at least claims 1 to 3, **characterized in that** the rear cover (11) is fixed to the frame (200) by at least one bolt.

5. Motorcycle according to at least one of claims 1 to 4, **characterized in that** the lower cover (14) comprises side walls (141a) that cover the unit (17) from the right and left of the motorcycle (1).

6. Motorcycle according to claim 5, **characterized in that** the side walls (141 a) and the side frames (15) overlap each other when seen in a side view.

7. Motorcycle according to claim 5 or 6, **characterized in that** the lower cover (14) comprises at least one attachment part (142) connected to upper ends of the side walls (141 a) to extend to the right and left direction of the motorcycle (1) and provided above the side frames (15).

8. Motorcycle according to at least one of claims 1 to 8, **characterized in that** the lower cover (14) comprises a rear wall (141b) that covers the unit (17) from behind the motorcycle (1) in a front-back direction of the motorcycle (1).

9. Motorcycle according to at least one of claims 1 to 8, **characterized in that** a coupling frame (18) extends in a crosswise direction of the motorcycle (1) and connects the right and left side frames (15).

10. Motorcycle according to claim 9, **characterized in that** a lower end of the unit (17) is positioned behind and/or above a lower end of the coupling frame (18) when seen in a side view.

11. Motorcycle according to at least one of claims 1 to 9, **characterized in that** a first coupling frame (18) extends in a crosswise direction of the motorcycle (1) and connects the right and left side frames (15),
a second coupling frame (191) is positioned behind the first coupling frame (18) to connect the right and left side frames (15),
the unit (17) is preferably provided in a region surrounded by the right and left side frames (15), the first coupling frame (18) and the second coupling frame (191) when seen in a top view, and
the lower cover (14) is preferably fixed to upper parts of the first coupling frame (18) and the second coupling frame (191).

12. Motorcycle according to claim 11, **characterized in that** at least one bolt (41) used to fix the lower cover (14) and the first coupling frame (18) is inserted from an upper side of the lower cover (14).

13. Motorcycle according to claim 11 or 12, **characterized in that** at least one bolt (42) used to fix the lower cover (14) and the second coupling frame (191) is inserted from an upper side of the lower cover (14).

14. Motorcycle according to at least one of claims 1 to 13, **characterized in that** a lower end of the lower cover (14) is positioned under a lower end of the rear cover (11) when seen in a side view.

15. Motorcycle according to at least one of claims 1 to 14, **characterized in that** the unit (17) comprises a radio communication device configured to transmit present positional information received by the antenna to a management center (201).

16. Motorcycle according to at least one of claims 1 to 15, **characterized in that** the motorcycle (1) is an off-road type vehicle.

## Patentansprüche

1. Motorrad, das umfasst:
ein Hinterrad (8), das drehbar durch einen hinteren Arm (7) gelagert ist, der konfiguriert ist, um in eine vertikale Richtung zu schwenken;
einen Rahmen (200), der rechte und linke Seiten-Rahmen (15) hat, die sich nach oben zu einer Rück-Seite des Motorrads (1), oberhalb des Hinterrads (8), erstrecken;
einen Motor (3), der vor dem Hinterrad (8) positioniert ist, und an dem Rahmen (200) fixiert ist, ein hinteres Ende des hinteren Arms (7) lagert das Hinterrad (8), und ein vorderes Ende des hinteren Arms (7) ist durch den Rahmen (200) oder den Motor (3) drehbar gelagert,
einen Sitz (10), der oberhalb der rechten und linken Seiten-Rahmen (15) vorgesehen ist;
eine hintere Abdeckung (11), zumindest ein Teil der hinteren Abdeckung (11) ist hinter dem Sitz (10) positioniert, und die hintere Abdeckung (11) hat einen vorderen Teil der unter dem Sitz (10) positioniert ist, **gekennzeichnet durch** eine Einheit (17), welche eine Antenne beinhaltet, die konfiguriert ist um ein Global-Positionierungs-System (GPS) Signal zu empfangen und welche zwischen den rechten und linken Seiten-Rahmen (15) vorgesehen ist, wobei die Einheit (17) eine Box-Form hat, deren Länge in eine vertikale Richtung kleiner ist als ein Länge in der Quer-Richtung und eine Länge in der Vorder-Rück-Richtung, so dass die Einheit (17) einen größeren Bereich hat, wenn betrachtet von einer Oben-Ansicht, als wenn betrachtet in einer Seiten-Ansicht; und
eine untere Abdeckung (14), die unter der Einheit (17) positioniert ist und an den rechten und linken Seiten-Rahmen (15) fixiert ist, wobei eine untere Seite der Einheit (17) mit der unteren Abdeckung (14) abgedeckt ist, und ein obere Seite der Einheit (17) ist mit einem hinteren Teil des Sitz (10) und dem vorderen Teil der hinteren Abdeckung (11) abgedeckt.

2. Motorrad gemäß Anspruch 1, **dadurch gekennzeichnet dass** die Einheit (17) und die Seiten-Rahmen (15) miteinander überlappen, wenn in einer Seiten-Ansicht betrachtet.

3. Motorrad gemäß Anspruch 1 oder 2, **dadurch gekennzeichnet dass** der Sitz (10) durch zumindest einen Bozen an dem Rahmen (200) fixiert ist.

4. Motorrad gemäß zumindest einem der Ansprüche 1 bis 3, **dadurch gekennzeichnet dass** die hintere Abdeckung (11) an dem Rahmen (200) durch zumindest einen Bolzen fixiert ist.

5. Motorrad gemäß zumindest einem der Ansprüche 1 bis 4, **dadurch gekennzeichnet dass** die untere Abdeckung (14) Seiten-Wände (141a) umfasst, welche die Einheit (17) von links und rechts von dem Motorrad (1) abdeckt.

6. Motorrad gemäß Anspruch 5, **dadurch gekennzeichnet dass** die Seiten-Wände (141a) und die Seiten-Rahmen (15) miteinander überlappen, wenn in einer Seiten-Ansicht betrachtet.

7. Motorrad gemäß Anspruch 5 oder 6, **dadurch gekennzeichnet dass** die untere Abdeckung (14) zumindest ein Anbringungsteil (142) umfasst, das mit oberen Enden der Seiten-Wände (141a) verbunden ist, um sich in die rechte und linke Richtung des Motorrad (1) zu erstrecken, und oberhalb der Seiten-Rahmen (15) vorgesehen ist.

8. Motorrad gemäß zumindest einem der Ansprüche 1 bis 8, **dadurch gekennzeichnet dass** die untere Abdeckung (14) eine Rück-Wand (141 b) umfasst, welche die Einheit (17) von hinten von dem Motorrad (1) in einer Vorder-Rück-Richtung des Motorrads (1) abdeckt.

9. Motorrad gemäß zumindest einem der Ansprüche 1 bis 8, **dadurch gekennzeichnet dass** ein Kopplungs-Rahmen (18) sich in eine Quer-Richtung des Motorrads (1) erstreckt und die rechten und linken Seiten-Rahmen (15) verbindet.

10. Motorrad gemäß Anspruch 9, **dadurch gekennzeichnet dass** ein unteres Ende der Einheit (17) hinter und/oder oberhalb eines unteren Endes des Kopplungs-Rahmens (18) positioniert ist, wenn in einer Seiten-Ansicht betrachtet.

11. Motorrad gemäß zumindest einem der Ansprüche 1 bis 9, **dadurch gekennzeichnet dass** ein erster Kopplungs-Rahmen (18) sich in eine Quer-Richtung des Motorrads (1) erstreckt und die rechten und linken Seiten-Rahmen (15) verbindet,
ein zweiter Kopplungs-Rahmen (191) ist hinter dem ersten Kopplungs-Rahmen (18) positioniert, um die rechten und linken Seiten-Rahmen (15) zu verbinden,
die Einheit (17) ist bevorzugt in einem Bereich vorgesehen, der durch die rechten und linken Seiten-Rahmen (15), den ersten Kopplungs-Rahmen (18) und dem zweiten Kopplungs-Rahmen (191) umgeben ist, wenn in einer Oben-Ansicht betrachtet, und die untere Abdeckung (14) ist bevorzugt an oberen Teilen des ersten Kopplungs-Rahmens (18) und des zweiten Kopplungs-Rahmens (191) fixiert.

12. Ein Motorrad gemäß Anspruch 11, **dadurch gekennzeichnet dass** zumindest ein Bolzen (41) verwendet ist, um die untere Abdeckung (14) zu fixieren, und der erste Kopplungs-Rahmen (18) ist von einer oberen Seite der unteren Abdeckung (14) eingesetzt.

13. Motorrad gemäß Anspruch 11 oder 12, **dadurch gekennzeichnet dass** zumindest ein Bolzen (42) verwendet ist, um die untere Abdeckung (14) zu fixieren, und der zweite Kopplungs-Rahmen (191) ist von einer oberen Seite der unteren Abdeckung (14) eingesetzt.

14. Motorrad gemäß zumindest einem der Ansprüche 1 bis 13, **dadurch**
**gekennzeichnet dass** ein unteres Ende der unteren Abdeckung (14) unter einem unteren Ende der hinteren Abdeckung (11) positioniert ist, wenn in einer Seiten-Ansicht betrachtet.

15. Motorrad gemäß zumindest einem der Ansprüche 1 bis 14, **dadurch**
**gekennzeichnet dass** die Einheit (17) eine Radio-Kommunikations-Vorrichtung umfasst, die konfiguriert ist um vorliegende Positionsinformationen, die durch die Antenne empfangen sind, zu einem Management-Zentrum (201) zu übertragen.

16. Motorrad gemäß zumindest einem der Ansprüche 1 bis 15, **dadurch gekennzeichnet dass** das Motorrad (1) ein Off-Road-Typ-Fahrzeug ist.

## Revendications

1. Motocyclette, comprenant :
une roue arrière (8) supportée de manière à pouvoir tourner par un bras arrière (7) configuré pour basculer dans le sens vertical ;
un cadre (200) ayant des cadres latéraux droit et gauche (15) s'étendant vers le haut et l'arrière de la motocyclette (1) au-dessus de la roue arrière (8) ;
un moteur (3) positionné à l'avant de la roue arrière (8) et fixé au cadre (200), une extrémité arrière du bras arrière (7) soutient la roue arrière (8), et une extrémité avant du bras arrière (7) est supportée de manière à pouvoir tourner par le cadre (200) ou le moteur (3),
un siège (10) prévu au-dessus des cadres latéraux droit et gauche (15),
un capot arrière (11), au moins une partie du capot arrière (11) est positionnée derrière le siège (10), et le capot arrière (11) présente une partie avant qui est positionnée sous le siège (10), **caractérisée par**
une unité (17) incluant une antenne configurée pour recevoir un signal de système de géolocalisation (GPS) et prévue entre les cadres latéraux droit et gauche (15),
où l'unité (17) présente une forme de boîte dans la longueur dans un sens vertical est plus petite qu'une longueur dans le sens transversal et une longueur dans le sens avant-arrière, de sorte que l'unité (17) présente une surface supérieure lorsqu'observée en vue supérieure par rapport au sens d'observation en vue latérale ; et
un capot inférieur (14) positionné sous l'unité (17) et fixé aux cadres latéraux droit et gauche (15), où un côté inférieur de l'unité (17) est recouvert du capot inférieur (14) et un côté supérieur de l'unité (17) est recouvert d'une partie arrière du siège (10) et de la partie avant du capot arrière (11).

2. Motocyclette selon la revendication 1, **caractérisée en ce que** l'unité (17) et les cadres latéraux (15) se chevauchent l'un l'autre lorsqu'observés en vue latérale.

3. Motocyclette selon la revendication 1 ou 2, **caractérisée en ce que** le siège (10) est fixé par au moins un boulon au cadre (200).

4. Motocyclette selon au moins les revendications 1 à 3, **caractérisée en ce que** le capot arrière (11) est fixé au cadre (200) par au moins un boulon.

5. Motocyclette selon au moins l'une des revendications 1 à 4, **caractérisée en ce que** le capot inférieur (14) comprend des parois latérales (141a) qui recouvrent l'unité (17) depuis la droite et la gauche de la motocyclette (1).

6. Motocyclette selon la revendication 5, **caractérisée en ce que** les parois latérales (141a) et les cadres latéraux (15) se chevauchent l'un l'autre lorsqu'observés en vue latérale.

7. Motocyclette selon la revendication 5 ou 6, **caractérisée en ce que** le capot inférieur (14) comprend au moins une pièce de fixation (142) connectée aux extrémités supérieures des parois latérales (141a) pour s'étendre vers le sens droit et gauche de la motocyclette (1) et prévue au-dessus des cadres latéraux (15).

8. Motocyclette selon au moins l'une des revendications 1 à 8, **caractérisée en ce que** le capot inférieur (14) comprend une paroi arrière (141b) qui recouvre l'unité (17) depuis l'arrière de la motocyclette (1) dans un sens avant-arrière de la motocyclette (1).

9. Motocyclette selon au moins l'une des revendications 1 à 8, **caractérisée en ce qu'**un cadre de couplage (18) s'étend dans un sens transversal de la motocyclette (1) et connecte les cadres latéraux droit et gauche (15).

10. Motocyclette selon la revendication 9, **caractérisée en ce qu'**une extrémité inférieure de l'unité (17) est positionnée derrière et/ou au-dessus d'une extrémité inférieure du cadre de couplage (18) lorsqu'observée en vue latérale.

11. Motocyclette selon au moins l'une des revendications 1 à 9, **caractérisée en ce qu'**un premier cadre de couplage (18) s'étend dans un sens transversal de la motocyclette (1) et connecte les cadres latéraux droit et gauche (15),
un second cadre de couplage (191) est positionné à l'arrière du premier cadre de couplage (18) pour connecter les cadres latéraux droit et gauche (15),
l'unité (17) est préférablement prévue dans une région entourée des cadres latéraux droit et gauche (15), du premier cadre de couplage (18) et du second cadre de couplage (191) lorsqu'observée en vue de dessus, et
le capot inférieur (14) est préférablement fixé aux parties supérieures du premier cadre de couplage (18) et du second cadre de couplage (191).

12. Motocyclette selon la revendication 11, **caractérisée en ce que** le au moins un boulon (41) utilisé pour fixer le capot inférieur (14) et le premier cadre de couplage (18) est inséré depuis un côté supérieur du capot inférieur (14).

13. Motocyclette selon la revendication 11 ou 12, **caractérisée en ce que** le au moins un boulon (42) utilisé pour fixer le capot inférieur (14) et le second cadre de couplage (191) est inséré depuis un côté supérieur du capot inférieur (14).

14. Motocyclette selon au moins l'une des revendications 1 à 13, **caractérisée en ce que** l'extrémité inférieure du capot inférieur (14) est positionnée sous une extrémité inférieure du capot arrière (11) lorsqu'observée en vue latérale.

15. Motocyclette selon au moins l'une des revendications 1 à 14, **caractérisée en ce que** l'unité (17) comprend un dispositif de communication radio configuré pour transmettre l'information de position actuelle reçue par l'antenne à un centre de gestion (201).

16. Motocyclette selon au moins l'une des revendications 1 à 15, **caractérisée en ce que** la motocyclette (1) est un véhicule de type tout-terrain.
